# DEMANDE DE BREVET EUROPEEN

(11) **EP 0 855 374 A1**
(43) Date de publication de la demande: **29.07.1998**
(21) Numéro de dépôt: 97402739.3
(22) Date de dépôt: 17.11.1997
(51) Int. Cl.: C04B 35/64, C04B 35/486, F27D 3/00

(54) **Procédé de frittage de tubes céramiques**

(30) Priorité: 27.01.1997 FR 9700847
(71) Demandeur: SOCIETE DES CERAMIQUES TECHNIQUES, 65460 Bazet (FR)
(72) Inventeur: Martreuil, Martial, 65100 Bartres (FR); Gillot, Jaques, 65310 Odos (FR); Henneguez, Philippe, 65000 Tarbes (FR)
(74) Mandataire: Pochart, François

(57) **Abrégé**

La présente invention a pour objet un procédé de frittage de tubes-ébauches (2) dans un four en vue de l'obtention de tubes en céramique présentant une grande rectitude, dans lequel, au cours du frittage, les tubes-ébauches (2) sont placés à l'intérieur de tubes-supports (1) en matière céramique, lesdits tubes-ébauches (2) ayant un diamètre intérieur compris entre 1,8 et 2,2mm et un diamètre extérieur compris entre 3mm et 4mm et les tubes-supports (1) ayant un diamètre intérieur supérieur à 4,5mm. Ainsi, la surface intérieure des tubes-supports (1) ne s'écarte pas sensiblement d'un cylindre idéal, le défaut de rectitude de cette surface étant inférieur à 0,1mm sur une longueur de 90mm.

## Description

La présente invention concerne un procédé de traitement thermique et de frittage de tubes céramiques constitués principalement de zircone, d'un diamètre intérieur de quelques millimètres, d'une épaisseur de paroi de quelques dixièmes de millimètres et d'une longueur de quelques centimètres. Elle concerne en particulier un procédé qui permet d'obtenir de tels tubes avec une grande précision sur le plan de la rectitude directement à la fin de l'opération de frittage, sans avoir à leur faire subir une opération d'usinage. De tels tubes sont utilisés notamment comme manchons d'assemblage de connecteurs de fibres optiques.

Il est connu de produire des tubes de céramique d'un diamètre intérieur de quelques millimètres, d'une épaisseur de paroi de quelques dixièmes de millimètres et d'une longueur de quelques centimètres par un procédé comprenant une étape de mise en forme par pressage isostatique ou par injection d'un tube-ébauche constitué d'un mélange de poudre céramique et de liants organiques, puis une étape de traitement thermique de ce tube-ébauche de manière à éliminer ces liants et à fritter la matière céramique pour la densifier et la consolider.

La surface intérieure d'un tube-ébauche obtenu après cette étape de pressage isostatique ou d'injection est très proche d'un cylindre parfait, car elle résulte du moulage du mélange de poudre céramique et de liants sur une broche métallique qu'il est facile d'usiner avec une très grande précision. Les sections de la surface intérieure de ce tube-ébauche perpendiculairement à son axe longitudinal sont des cercles. Les sections de cette surface intérieure par des plans passant par cet axe sont des droites qui sont les génératrices du cylindre constituant cette surface intérieure.

Pendant l'étape de traitement thermique de frittage, les tubes-ébauches subissent plusieurs transformations: les liants organiques qu'ils contiennent se volatilisent par évaporation ou par oxydation et la partie minérale du tube se densifie et se consolide, ce qui entraîne un retrait qui peut aller de 15% à 25% dans chaque direction. Suivant les dimensions et les positions respectives des diverses pièces de réfractaire utilisées pour positionner les tubes-ébauches dans le four et suivant le programme de traitement thermique, ce retrait s'accompagne ou non de déformations. En particulier, la pièce, qui était rectiligne, se courbe, perdant ainsi sa rectitude, alors que les sections de sa surface intérieure perpendiculairement à sa grande longueur restent des cercles de diamètre constant d'une extrémité à l'autre de la pièce. On mesure son défaut de rectitude sur sa longueur totale en introduisant dans la pièce des piges cylindriques de différents diamètres: le défaut de rectitude est défini comme étant la différence entre le diamètre de la section intérieure de la pièce et le diamètre de la plus grosse pige cylindrique qui rentre librement dans la pièce sur toute sa longueur. Ceci correspond aussi au fait que si d est le défaut de rectitude sur une longueur L, l'intersection de la surface intérieure globalement cylindrique du tube par un plan passant par l'axe de ce cylindre est une courbe qui, sur une longueur L, ne s'écarte pas dans chaque sens de plus de d/2 d'une droite.

Quand on utilise les procédés de frittage connus, pour obtenir un tube ayant les dimensions dans l'ordre de grandeur cité ci-dessus et dont la forme exacte soit d'une grande précision sur le plan de la rectitude de sa surface interne, il est nécessaire du fait de cette déformation d'effectuer après le frittage une opération complémentaire d'usinage de cette surface, ce qui est délicat vu son faible diamètre intérieur, et coûteux.

La présente invention permet de résoudre de façon avantageuse les problèmes auxquels on se heurte lors de la mise en oeuvre des procédés connus et permet de résoudre le problème de l'obtention d'une parfaite rectitude. On a en outre constaté que, de façon surprenante et inattendue, les organes utilisés pour positionner les tubes-ébauches dans le four, lorsqu'il sont soumis à de hautes températures, ne donnent pas lieu à fluage, et donc ne se déforment pas. Par ailleurs le procédé selon l'invention permet non seulement de réutiliser ces organes un grand nombre de fois, mais en outre permet une utilisation optimum des fours, ce dont il résulte bien entendu un prix de revient plus faible des tubes-ébauches obtenus selon l'invention.

Le but de l'invention est donc de produire des tubes de céramique d'un diamètre intérieur de un à quelques millimètres, d'une épaisseur de paroi de quelques dixièmes de millimètres, d'une longueur de quelques centimètres et d'une grande rectitude et ce sans opération d'usinage après le frittage. Il est aussi d'offrir un mode de chargement très compact des tubes-ébauches dans le four de frittage, cette compacité permettant de fritter un grand nombre de tubes-ébauches par fournée, donc d'abaisser le coût de frittage par tube.

La présente invention se rapporte à un procédé de traitement thermique de frittage de tubes-ébauches dans un four en vue de l'obtention de tubes en céramique présentant une grande rectitude, dans lequel, au cours du frittage, les tubes-ébauches sont placés à l'intérieur de tubes-supports en matière céramique.

La présente invention a pour objet un procédé de frittage de tubes-ébauches dans lequel la surface intérieure des tubes-supports ne s'écarte pas sensiblement d'un cylindre idéal, le défaut de rectitude de cette surface étant inférieur à 0,1 mm sur une longueur de 90mm.

Selon un mode de réalisation de l'invention, les tubes-supports contenant les tubes-ébauches sont disposés parallèlement entre eux pour former des empilements de nappes supportés par des plaques-supports en matériau réfractaire.

Selon un autre mode de réalisation de l'invention, au moins 5 nappes superposées sont disposées sur une plaque-support en matériau réfractaire.

Selon un autre mode encore de réalisation de l'invention, le chargement du four est constitué d'au moins un empilement de plusieurs unités de chargement, chaque unité de chargement étant constituée d'une plaque-support sur laquelle sont disposées plusieurs nappes superposées et des piliers en matière réfractaire sur lesquels prend appui la plaque-support disposée immédiatement au-dessus.

Selon encore un autre mode de réalisation de l'invention, dans une unité de chargement, la distance entre le sommet de la nappe supérieure et la plaque-support qui lui est immédiatement supérieure est au maximum de 40mm.

Selon un mode d'exécution de l'invention, le four est chauffé par la combustion de gaz naturel.

Selon un autre mode d'exécution de l'invention, les tubes-supports sont constitués d'alumine d'une pureté supérieure à 97%, de préférence supérieur à 98%, dont la dimension moyenne des cristaux est supérieure à 10 microns.

Selon un mode d'exécution encore de l'invention, les tubes-supports sont constitués d'alumine d'une pureté supérieure à 99,5%, dont la dimension moyenne des cristaux est supérieure à 10 microns.

Selon encore un autre mode d'exécution de l'invention, la partie minérale des tubes-ébauches est constituée de zircone yttriée contenant de 2 à 4 mole% de Y2O3 et formée de particules dont la dimension moyenne est inférieure à 1 micron.

Selon un mode de réalisation de l'invention, le cycle de frittage comprend une montée jusqu'à une température comprise entre 1450oC et 1550oC, suivie d'un palier d'une durée de 1 à 3 heures à cette température, puis d'un refroidissement, la durée s'écoulant entre le début de la montée en température et la fin du palier étant au plus égale à 38 heures.

Selon un autre mode de réalisation de l'invention, le rapport du diamètre intérieur des tubes-supports au diamètre extérieur des tubes-ébauches est supérieur à 1,25.

Selon un autre mode de réalisation encore de l'invention, les tubes-ébauches ont un diamètre intérieur compris entre 1,8 et 2,2mm et un diamètre extérieur compris entre 3mm et 4mm et les tubes-supports un diamètre intérieur supérieur à 4,5mm.

Selon encore un autre mode de réalisation de l'invention, les ébauches ont un diamètre intérieur compris entre 1,85 et 2,1mm et un diamètre extérieur compris entre 3,3mm et 3,7mm et les tubes-supports un diamètre intérieur compris entre 4,5mm et 8mm.

Dans une variante du procédé selon l'invention, chaque tube-support ne contient qu'un tube-ébauche.

Dans une autre variante du procédé selon l'invention, le rapport longueur des tubes-supports/longueur des tubes-ébauches est compris entre 0,85 et 1,5.

Dans une autre variante encore du procédé selon l'invention, chaque tube-support contient plusieurs tubes-ébauches disposés dans le prolongement les uns des autres.

Les caractéristiques de l'invention apparaîtront clairement au vu de la description qui suit et des figures données à titre d'exemple non limitatif.

Les figures 1 et 2 (subdivisée en figures 2a et 2b) représentent un tube-ébauche placé dans un tube-support vu respectivement en coupe transversale et en coupe longitudinale, au stade du début de la cuisson de frittage. Le tube-ébauche représenté sur la figure 2b correspond à un mode de réalisation du procédé de l'invention où le tube-ébauche dépasse de chacune des extrémités d'un tube-support, ce qui n'est pas le cas du mode de réalisation du procédé correspondant à celui où le tube-ébauche est dans la position telle que représentée sur la figure 2a.

La figure 3 représente une unité de chargement du four et la plaque-support et les piliers de réfractaire de l'unité de chargement immédiatement supérieure, conformes à un mode de réalisation du procédé de l'invention.

La fig 4 représente un empilement, conforme à un mode de réalisation du procédé de l'invention, d'unités de chargement sur la sole du four.

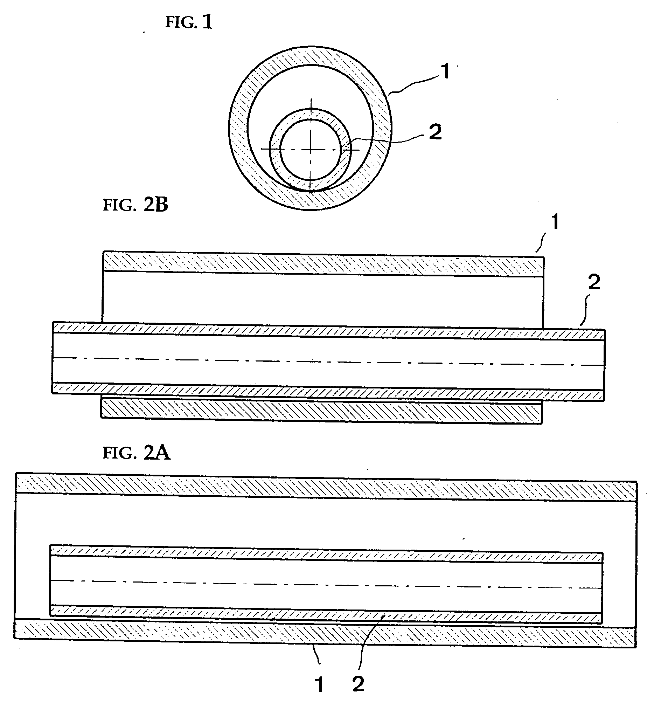

Les figures 1, 2a et 2b représentent des tubes 1 de matière réfractaire dans lesquelles sont placés les tubes-ébauches 2.

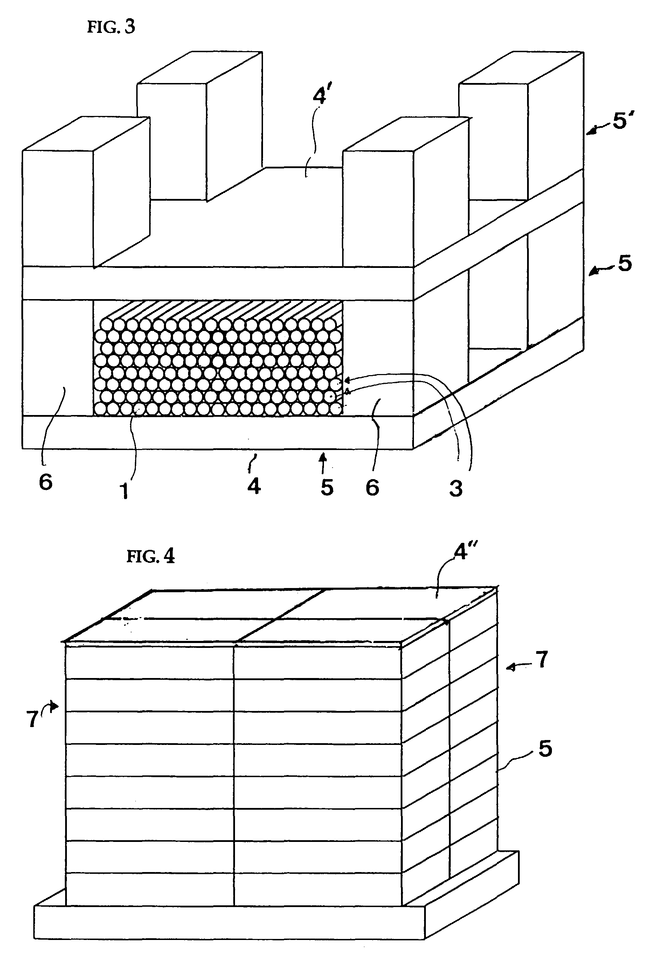

Il a été constaté que les défauts de rectitude peuvent être minimisés si, pendant l'opération de frittage, on place les tubes-ébauches 2, comme le représentent les figures 1 et 2, à l'intérieur de tubes de matière réfractaire 1, appelés ici tubes-supports 1 ayant une composition et des dimensions appropriées. Les tubes-supports 1 sont avantageusement disposés parallèlement les uns aux autres en vue de former, comme cela est montré sur la figure 3, plusieurs nappes 3 superposées disposées sur des plaques 4, sensiblement horizontales, formées de matière réfractaire, appelées ici plaques-supports 4. La charge du four est avantageusement constituée de plusieurs ensembles 5, appelés ici unités de chargement 5, chaque unité de chargement 5 étant constituée, comme le montre la figure 3, d'une plaque-support 4, de tubes-supports 1, dont chacun contient un tube-ébauche 2, qui sont disposés de façon à former plusieurs nappes 3, et de pièces de matière réfractaire, appelées ici piliers 6, disposées en divers points de la plaque-support et sur lesquelles repose la plaque-support 4' qui fait partie de l'unité de chargement 5' immédiatement supérieure. Les unités de chargement 5, 5', etc peuvent ainsi être superposées, la charge du four étant alors constituée d'un ou plusieurs empilements 7 comprenant chacun au moins une unité de chargement

Les tubes-supports 1 sont de préférence constitués d'un oxyde réfractaire qui présente des caractéristiques telles qu'il ne réagit pas avec le tube-ébauche 2 lors du frittage de ce dernier, que les tubes-supports 1 ne se déforment pas lors de traitements thermiques répétés, ce qui permet de les réutiliser de nombreuses fois, et que les tubes-supports soient d'un coût de production modéré. Il a été trouvé que des tubes constitués d'alumine d'une pureté supérieure à 97%, de préférence supérieure à 98% et plus particulièrement supérieure à 99,5% conviennent très bien pour l'obtention des tubes-supports 1. De préférence, ces tubes-supports 1 ont une structure composée de cristaux dont la dimension moyenne est d'au moins 10 microns.

En effet, il a été constaté que lorsque la taille des cristaux est trop petite, les tubes-supports ont tendance à se déformer par fluage et à perdre ainsi leur rectitude

De tels tubes conviennent en particulier pour le frittage de tubes de zircone yttriée contenant de 2 à 4 mole% d'yttrium.

Le programme de température suivi pour effectuer le frittage a une forte influence sur la rectitude des tubes issus des tubes-ébauches. On pourrait s'attendre à ce qu'un programme ne comprenant que des variations lentes de température, qui assure une grande homogénéité des températures des tubes à fritter, donne des tubes d'une grande rectitude. De façon surprenante, on a constaté qu'au contraire il faut que le programme de montée en température soit relativement rapide pour que la rectitude des tubes frittés soit bonne. On a constaté par exemple que pour obtenir des tubes d'une bonne rectitude à partir de tubes-ébauches en zircone yttriée à 3 mole%, d'un diamètre intérieur compris entre 1,8 et 2,2mm, d'un diamètre extérieur compris entre 3mm et 4mm et d'une longueur de 90mm placés dans des tubes-supports d'un diamètre intérieur compris entre 5 et 15mm, il est nécessaire d'utiliser un programme de frittage dont la durée cumulée de la montée en température à partir de 20oC et du palier à une température maximale comprise entre 1450 et 1550oC ne dépasse pas 38 heures.

Les tubes de céramique obtenus par ce procédé, à partir des tubes-ébauches 2, sont utilisés dans des applications où une grande précision dimensionnelle est nécessaire. En particulier, après rectification de leur surface extérieure et tronçonnage, ils sont utilisés comme composants de connecteurs de fibres optiques.

### EXEMPLE 1 conforme à l'invention

On prépare par pressage isostatique de grains atomisés de zircone yttriée à 3 mole% de Y2O3 (TZ3YB de la société japonaise TOSOH) des tubes-ébauches d'un diamètre intérieur de 2,00mm, d'un diamètre extérieur de 3,50mm et d'une longueur de 90mm. La broche utilisée pour le pressage isostatique étant d'une très grande rectitude, les tubes-ébauches ont un défaut de rectitude inférieur à 0,02mm. Pour les fritter, on place chaque tube-ébauche 2 dans un tube-support 1 ayant un diamètre intérieur de 5mm, un diamètre extérieur de 8mm et une longueur de 100mm, et dont le défaut de rectitude est inférieur à 0,08mm (figure 1 et 2a). Ces tubes-supports 1 sont constitués d'alumine d'une pureté de 99,7%, dont les cristaux ont une dimension moyenne de 25 microns.

Pour fritter ces tubes-ébauches 2, on dispose ensuite les tubes-supports 1 contenant les tubes-ébauches sur des plaques de réfractaire rectangulaires, appelées ici plaques-supports 4, d'une dimension de 270mm sur 300mm et d'une épaisseur de 20mm. Sur chaque plaque-support 4, les tubes-supports 1, contenant les tubes-ébauches, sont disposés parallèlement les uns aux autres en 8 nappes 3 horizontales superposées dont chacune contient 17 ou 18 tubes-supports. A l'intérieur de chaque nappe 3, les tubes-supports sont rangés de façon compacte, c'est-à-dire que chaque tube-support touche ses deux voisins. Plusieurs groupes de nappes 3 sont disposés sur chaque plaque-support 4, les nappes étant maintenus latéralement par des pièces 6 de réfractaire, également appelées piliers (6), comme le montre la figure 3. Les pièces de réfractaire 6, qui maintiennent latéralement les nappes de tubes-supports 1, servent aussi de piliers pour soutenir la plaque-support 4' de l'unité de chargement 5' située immédiatement au-dessus. Plusieurs unités de chargement sont à leur tour empilées dans le four. Le chargement du four est constitué de quatre empilements 7 (schématiquement représentés sur la figure 4) comprenant chacun 8 unités de chargement 5. L'unité de chargement 5 située au sommet de chaque empilement 7 est elle aussi surmontée d'une plaque-support 4'' semblable à la plaque-support 4. Dans chaque unité de chargement 5, la distance entre le dessus de la nappe 3 supérieure et la face inférieure de la plaque-support 4', située immédiatement au-dessus est de 20mm.

Il faut remarquer que ce système de superposition de nappes 3 de tubes-supports 1 permet d'obtenir une grande densité de chargement du four.

On fritte l'ensemble ainsi disposé dans un four chauffé par combustion de gaz naturel avec le programme de température suivant:
montée de 20 à 500°C à 40°C/heure
montée de 500 à 1400°C à 100°C/heure
montée de 1400 à 1500°C à 50°C/heure
palier à 1500°C pendant 2 heures
refroidissement naturel du four
soit une durée totale de montée en température et palier de frittage de 25 heures.

Les tubes de zircone résultant du frittage des tubes-ébauches ont un diamètre intérieur de 1,56mm, un diamètre extérieur de 2,72mm et une longueur de 70mm. Par mesure avec une pige d'un diamètre de 1,46mm, on constate qu'aucun de ces tubes ne présente un défaut de rectitude supérieur à 0,1mm.

### EXEMPLE 2 conforme à l'invention

On fritte des tubes-ébauches identiques à ceux de l'exemple 1. Pour cela, on les place dans des tubes-supports ayant un diamètre intérieur de 6mm, un diamètre extérieur de 8mm et une longueur de 80mm, et dont le défaut de rectitude est inférieur à 0,08mm. Ces tubes-supports sont constitués d'alumine d'une pureté de 99,8%, dont les cristaux ont une dimension moyenne de 50 microns. Les tubes-ébauches étant légèrement plus longs que les tubes-supports, au moment de la mise dans le four, chaque tube-ébauche dépasse de 5mm à chaque extrémité du tube-support (figure 2b). A la fin du frittage, du fait du retrait de frittage, les tubes frittés sont plus courts que les tubes-supports et sont donc contenus entièrement à l'intérieur de ces derniers.

On effectue le frittage dans le même four et dans les mêmes conditions que dans l'exemple 1. La mesure à la pige montre que seulement 1% des tubes frittés ont un défaut de rectitude supérieur à 0,1 mm.

### EXEMPLE 3 conforme à l'invention

On fritte des tubes-ébauches identiques à ceux de l'exemple 1. Pour cela, on les place dans des tubes-supports ayant un diamètre intérieur de 15mm, un diamètre extérieur de 20mm et une longueur de 200mm, et dont le défaut de rectitude, mesuré sur une longueur de 100mm, est inférieur à 0,08mm. Ces tubes-supports sont constitués d'alumine d'une pureté de 99,7%, dont les cristaux ont une dimension moyenne de 15 microns. Dans chaque tube-support, on place deux tubes-ébauches disposés dans le prolongement l'un de l'autre. On effectue le frittage dans le même four et dans les mêmes conditions que dans l'exemple 1, les seules différences étant que chaque groupe de nappes est constitué de 3 nappes superposées dont chacune contient 6 ou 7 tubes-supports et que dans chaque unité de chargement, la distance entre le dessus de la nappe supérieure et la face inférieure de la plaque-support située immédiatement au-dessus est de 25mm.

Après frittage, aucun des tubes de zircone obtenus ne présente un défaut de rectitude supérieur à 0,1mm.

### EXEMPLE 4 conforme à l'invention

On prépare par pressage isostatique de grain atomisé de zircone yttriée à 3 mole% de Y2O3 des tubes-ébauches d'un diamètre intérieur de 1,80mm, d'un diamètre extérieur de 3.00mm et d'une longueur de 75mm. Leur défaut de rectitude est inférieur à 0,02mm. Pour les fritter, on place chaque tube-ébauche dans un tube-support ayant un diamètre intérieur de 5mm, un diamètre extérieur de 8mm et une longueur de 80mm, et dont le défaut de rectitude est inférieur à 0,05mm. Ces tubes-supports sont constitués d'alumine d'une pureté de 99,8%, dont les cristaux ont une dimension moyenne de 25 microns.

On les fritte en utilisant la même disposition dans le four et le même programme de température que dans l'exemple 1. Les tubes de zircone obtenus après frittage ont un diamètre intérieur de 1,40mm, un diamètre extérieur de 2.33mm, une longueur de 58mm et un défaut de rectitude inférieur à 0,07mm.

### EXEMPLE 5 conforme à l'invention

On prépare par pressage isostatique de grain atomisé de zircone yttriée à 3 mole% de Y2O3 des tubes-ébauches d'un diamètre intérieur de 2,20mm, d'un diamètre extérieur de 4,00mm et d'une longueur de 105mm. Leur défaut de rectitude est inférieur à 0,02mm. Pour les fritter, on place chaque tube-ébauche dans un tube-support ayant un diamètre intérieur de 7mm, un diamètre extérieur de 11 mm et une longueur de 120mm, et dont le défaut de rectitude est inférieur à 0,08mm. Ces tubes-supports sont constitués d'alumine d'une pureté de 99,8%, dont les cristaux ont une dimension moyenne de 25 microns.

On effectue le frittage dans le même four et dans les mêmes conditions que dans l'exemple 1, les seules différences étant que chaque groupe de nappes est constitué de 6 nappes superposées dont chacune contient 12 ou 13 tubes-supports. Les tubes de zircone obtenus après frittage ont un diamètre intérieur de 1.71mm, un diamètre extérieur de 3,11mm, une longueur de 82mm et un défaut de rectitude inférieur à 0,1mm.

### EXEMPLE 6 conforme à l'invention

On prépare des tubes-ébauches d'un diamètre intérieur de 2,00mm, d'un diamètre extérieur de 3,50mm et d'une longueur de 16mm. Pour les fritter, on place 5 tubes-ébauches dans le prolongement l'un de l'autre dans des tubes-supports identiques à ceux de l'exemple 1. On les fritte dans les mêmes conditions que dans l'exemple 1, en chargeant le four avec le même nombre de tubes-supports placés dans la même disposition.

Les tubes de zircone obtenus après frittage ont un diamètre intérieur de 1,56mm, un diamètre extérieur de 2,72mm, une longueur de 12,5mm et un défaut de rectitude inférieur à 5 microns.

### EXEMPLE 7 conforme à l'invention

On prépare des tubes-ébauches identiques à ceux de l'exemple 1 et on les dispose, à raison de respectivement 10 et 9 tubes par nappe en deux nappes sur des plaques-supports carrées de 200mm de côté, en utilisant les mêmes tubes-supports que dans l'exemple 1 et avec une distance de 20mm entre le dessus de la nappe supérieure et la face inférieure de la plaque-support située immédiatement au-dessus. On charge un empilement de 3 de ces unités de chargement dans un four à chauffage électrique, et on fritte les tubes-ébauches avec le programme de température suivant:
montée de 20 à 500°C à 60°C/heure
montée de 500 à 700°Cà 180°C/heure
montée de 700 à 1500°C à 300°C/heure
palier à 1500°C pendant 2 heures
refroidissement naturel du four
soit une durée totale de montée en température et palier de frittage de 13,8 heures.

Après frittage, les tubes de zircone obtenus présentent un défaut de rectitude inférieur à 0,1mm.

### EXEMPLE 8 conforme à l'invention

On prépare des tubes-ébauches identiques à ceux de l'exemple 1 et on les fritte dans le même four et dans les mêmes conditions que dans l'exemple 1, la seule différence étant le programme de température, qui est le suivant:
montée de 20 à 500°C à 40°C/heure
montée de 500 à 1400°C à 50°C/heure
montée de 1400 à 1500°C à 25°C/heure
palier à 1500°C pendant 2 heures
refroidissement naturel du four,
soit une durée totale de montée en température et palier de frittage de 36 heures.

Après frittage, les tubes de zircone obtenus présentent un défaut de rectitude inférieur à 0,1mm.

### EXEMPLE 9 non conforme à l'invention

On prépare des tubes-ébauches identiques à ceux de l'exemple 1 et on les fritte dans le même four et dans les mêmes conditions que dans l'exemple 1, la seule différence étant le programme de température, qui est le suivant:
montée de 20 à 500°C à 30°C/heure
montée de 500 à 1400°C à 50°C/heure
montée de 1400 à 1500°C à 25°C/heure
palier à 1500°C pendant 2 heures
refroidissement naturel du four
soit une durée totale de montée en température et palier de frittage de 40 heures.

Après frittage, 80% des tubes de zircone obtenus présentent un défaut de rectitude supérieur à 0,1mm.

### EXEMPLE 10 non conforme à l'invention

On fritte des tubes-ébauches identiques à ceux de l'exemple 1. Pour cela, on les place dans des tubes-supports ayant un diamètre intérieur de 4mm, un diamètre extérieur de 6.5mm et une longueur de 100mm, et dont le défaut de rectitude est inférieur à 0,08mm. Ces tubes-supports sont constitués d'alumine d'une pureté de 99,8%, dont les cristaux ont une dimension moyenne de 25 microns et présentant une porosité de 35% en volume et des pores d'un diamètre moyen de 12 microns. On effectue le frittage dans le même four et dans les mêmes conditions que dans l'exemple 1, les seules différences étant que chaque groupe de nappes est constitué de 10 nappes superposées dont chacune contient 24 ou 25 tubes-supports

Après frittage, 20% des tubes de zircone obtenus présentent un défaut de rectitude supérieur à 0,1mm.

### EXEMPLE 11 non conforme à l'invention

On prépare des tubes-ébauches identiques à ceux de l'exemple 1 et on les fritte dans le même four et dans les mêmes conditions que dans l'exemple 1, les seules différences étant que la charge du four est constituée de 4 empilements de chacun 4 unités de chargement et que, dans chaque unité de chargement, la distance entre le dessus de la nappe supérieure et la face inférieure de la plaque-support située immédiatement au-dessus est de 60mm.

Après frittage, 10% des tubes de zircone obtenus présentent un défaut de rectitude supérieur à 0,1mm.

On constate que ce taux de 10% de déchets dans cet exemple non conforme à l'invention est très nettement supérieur et donc se démarque du taux maximum de 1% de déchet considérés implicitement obtenu dans l'exemple 2 conforme à l'invention qui est le taux le plus défavorable auquel le procédé mis en oeuvre selon l'invention a conduit.

### EXEMPLE 12 non conforme à l'invention

On prépare des tubes-ébauches identiques à ceux de l'exemple 1 et on les place dans des tubes-supports identiques à ceux de l'exemple 3, que l'on dispose de la même façon et dans le même four que dans l'exemple 3. Toutefois, on dispose les tubes-ébauches différemment dans les tubes-supports: dans chaque tube-support, on juxtapose 2 ou 3 tubes-ébauches non pas dans le prolongement l'un de l'autre, mais côte-à-côte de façon jointive, dans la partie centrale de la longueur du tube-support. On réalise le frittage dans les mêmes conditions et avec le même programme de température que dans l'exemple 3.

Après frittage, on constate que 50% des tubes de zircone issus des tubes-ébauches juxtaposés deux par deux et 85% de ceux issus des tubes-ébauches juxtaposés trois par trois présentent un défaut de rectitude supérieur à 0,1mm.

### EXEMPLE 13 non conforme à l'invention

On prépare des tubes-ébauches identiques à ceux de l'exemple 1 et on les fritte dans le même four et dans les mêmes conditions que dans l'exemple 1, la seule différence étant que, dans une des unités de chargement, on utilise des tubes-supports de mêmes dimensions que ceux de l'exemple 1, mais constitués d'une matière céramique qui ne contient que 97% en masse d'alumine, le reste étant un mélange d'oxydes de silicium et de calcium qui forme une phase vitreuse avec une partie de l'alumine.

Après frittage, on constate que les tubes de zircone obtenus dans les tubes-supports à 97% d'alumine ont un défaut de rectitude inférieur à 0,1mm, mais qu'ils présentent des taches superficielles résultant d'une réaction chimique locale entre la zircone et le tube-support.

## Revendications

1. Procédé de frittage de tubes-ébauches (2) dans un four en vue de l'obtention de tubes en céramique présentant une grande rectitude, dans lequel, au cours du frittage, les tubes-ébauches (2) sont placés à l'intérieur de tubes-supports (1) en matière céramique, lesdits tubes-ébauches (2) ayant un diamètre intérieur compris entre 1,8 et 2,2mm et un diamètre extérieur compris entre 3mm et 4mm et les tubes-supports (1) ayant un diamètre intérieur supérieur à 4,5mm.

2. Procédé selon la revendication 1, dans lequel les tubes-ébauches (2) ont un diamètre intérieur compris entre 1,85 et 2,1mm et un diamètre extérieur compris entre 3,3mm et 3,7mm et les tubes-supports (1) un diamètre intérieur compris entre 4,5mm et 8mm.

3. Procédé selon la revendication 1 ou 2, dans lequel la surface intérieure des tubes-supports (1) ne s'écarte pas sensiblement d'un cylindre idéal, le défaut de rectitude de cette surface étant inférieur à 0,1mm sur une longueur de 90mm.

4. Procédé selon une quelconque des revendications 1 à 3, dans lequel les tubes-supports (1) contenant les tubes-ébauches (2) sont disposés parallèlement entre eux pour former des empilements (7) de nappes (3) supportés par des plaques-supports (4) en matériau réfractaire.

5. Procédé selon une quelconque des revendications 1 à 4, dans lequel chaque empilement (7) est formé d'au moins 5 nappes (3) de tubes-supports (1).

6. Procédé selon une quelconque des revendications 1 à 5, dans lequel le chargement du four est constitué d'au moins un empilement (7) de plusieurs unités de chargement (5) , chaque unité de chargement (5) étant constituée d'une plaque-support (4) sur laquelle sont disposées plusieurs nappes (3) superposées et de piliers (6) en matière réfractaire sur lesquels prend appui la plaque-support (4') disposée immédiatement au-dessus.

7. Procédé selon une quelconque des revendications 1 à 6, dans lequel, dans une unité de chargement (5) , la distance entre le sommet de la nappe (3) supérieure et la plaque-support (4') qui lui est immédiatement supérieure est au maximum de 40mm.

8. Procédé selon une quelconque des revendications 1 à 7, dans lequel le four est chauffé par la combustion de gaz naturel.

9. Procédé selon une quelconque des revendications 1 à 8, dans lequel les tubes-supports (1) sont constitués d'alumine d'une pureté supérieure à 97%, de préférence supérieure à 98%, dont la dimension moyenne des cristaux est supérieure à 10 microns.

10. Procédé selon une quelconque des revendications 1 à 9, dans lequel les tubes-supports (1) sont constitués d'alumine d'une pureté supérieure à 99.5%, dont la dimension moyenne des cristaux est supérieure à 10 microns.

11. Procédé selon une quelconque des revendications 1 à 10, dans lequel la partie minérale des tubes-ébauches (2) est constituée de zircone yttriée contenant de 2 à 4 mole% de Y₂O₃ et formée de particules dont la dimension moyenne est inférieure à 1 micron.

12. Procédé selon une quelconque des revendications 1 à 11, dans lequel le cycle de frittage comprend une montée jusqu'à une température comprise entre 1450oC et 1550oC, suivie d'un palier d'une durée de 1 à 3 heures à cette température, puis d'un refroidissement, la durée s'écoulant entre le début de la montée en température et la fin du palier étant au plus égale à 38 heures.

13. Procédé selon une quelconque des revendications 1 à 12, dans lequel le rapport diamètre intérieur des tubes-supports/diamètre extérieur des tubes-ébauches est supérieur à 1,25.

14. Procédé selon une quelconque des revendications 1 à 13, dans lequel chaque tube-support (1) ne contient qu'un tube-ébauche (2).

15. Procédé selon une quelconque des revendications 1 à 14, dans lequel le rapport longueur des tubes-supports/longueur des tubes-ébauches est compris entre 0,85 et 1,5.

16. Procédé selon une quelconque des revendications 1 à 13, dans lequel chaque tube-support (1) contient plusieurs tubes-ébauches (2) disposés dans le prolongement les uns des autres.
